(19) Europäisches Patentamt
European Patent Office
Office européen des brevets

(11) **EP 1 553 069 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(51) Int Cl.:
***C05F 17/00*** *(2006.01)*

(21) Anmeldenummer: **04450229.2**

(22) Anmeldetag: **15.12.2004**

(54) **Verfahren zum Steuern oder Regeln von Rotteprozessen**

Method for controlling or regulating composting processes

Méthode de commande ou de régulation de procédés de compostage

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.12.2003 AT 20242003**

(43) Veröffentlichungstag der Anmeldung:
**13.07.2005 Patentblatt 2005/28**

(73) Patentinhaber: **Harrer, Ewald**
**3544 Idolsberg (AT)**

(72) Erfinder:
• **Hanke, Reinhart**
**8700 Leoben (AT)**
• **Harrer, Ewald**
**3544 Idolsberg (AT)**

(74) Vertreter: **Haffner, Thomas M.**
**Haffner und Keschmann**
**Patentanwälte KG**
**Schottengasse 3a**
**1014 Wien (AT)**

(56) Entgegenhaltungen:
**EP-A- 0 486 466    EP-A- 0 647 604**
**EP-A- 0 884 593    EP-A- 1 010 680**

Bemerkungen:
Die Akte enthält technische Angaben, die nach dem Eingang der Anmeldung eingereicht wurden und die nicht in dieser Patentschrift enthalten sind.

## Beschreibung

Die Erfindung bezieht sich auf ein Verfahren zum Steuern oder Regeln von aeroben Rotteprozessen, bei welchem aus Messwerten für Temperatur und/oder Feuchtigkeit und/oder Prozessluftmenge die Belüftungsintensität bzw. die Prozesstemperaturen und/oder die erforderliche Wassermenge zur Nachfeuchtung der Charge gesteuert oder geregelt wird.

Verfahren zur Steuerung von Rotteprozessen, bei welchen in vorgegebenen zeitintervallen aus Messwerten der Prozessluft Zustände vor und nach dem Durchgang durch das Rottegut sowie der Prozessluftmenge eine Stoff- und Wärmebilanz des prozesses errechnet wurde, sind seit längerer Zeit bekannt. Aus dem auf diese Weise errechneten Wert wurde in Verbindung mit den bekannten Daten der Chargenmasse sowie dem Gehalt an Feuchte und organischer Trockensubstanz, unter Berücksichtigung erfolgter Nachfeuchtungen des Rottegutes, jeweils der aktuelle Zustand der Rotte berechnet. Aus den errechneten Werten des aktuellen Zustands der Charge wurden dann jeweils die weiteren Schritte der Prozessführung, wie beispielsweise die erforderliche Nachfeuchtung, die Anpassung der Prozesstemperatur oder die Änderung der Belüftungsintensität, abgeleitet.

Die Bedingungen, unter denen Rotteprozesse durchgeführt werden können, sind aber nicht mehr ausschließlich von saisonal bedingten Unterschieden der Zusammensetzung der Chargen sowie Wärme- und Stoffbilanzen bestimmt. In jüngerer Zeit waren eine Reihe restriktiver verfahrenstechnischer Randbedingungen durch Gesetze und Verordnungen normiert. Insbesondere ändert sich die Qualität des Einsatzmaterials durch getrennte Sammlung, wobei zumeist auch eine mechanische Aufarbeitung erforderlich ist. Die Prozessführung muss in aller Regel in geschlossenen Reaktoren oder Hallen erfolgen und es können Parameter, wie beispielsweise Prozesstemperaturen, vorgegeben werden, wie sie für die Hygienisierung des Rottegutes erforderlich erscheinen. Schließlich können Vorschriften die Behandlungsdauer in einzelnen Prozessabschnitten betreffen und an Zwischenprodukte spezifische Anforderungen gestellt werden, wie beispielsweise die Atmungsaktivität am Ende der sogenannten Intensivrotte. Zu allem Überfluss erfolgen neuerdings auch Beschränkungen betreffend den Prozessluftverbrauch, wodurch Rotteprozesse nicht mehr notwendiger Weise im Sinne einer optimalen Qualität des Endproduktes sondern vorrangig zur Erfüllung verfahrenstechnischer Vorschriften bzw. Randbedingungen betrieben werden müssen. Besonders vorteilhaft erscheint es daher einen zumindest anlagenspezifisch standardisierten Rotteprozess zu organisieren, bei welchem zwar zum Teil auf die ursprünglichen Ziele einer Kompostherstellung verzichtet wird, welcher aber den breitgefächerten Anforderungen jeweils entspricht. Im Sinne einer Standardisierung der Prozessführung scheint es nun durchaus sinnvoll das Einsatzmaterial entsprechend zu homogenisieren und in der Qualität zu vergleichmäßigen, die Qualität der Prozessrohluft entsprechenden Normen zu unterwerfen und gleichmäßigere und gut kontrollierbare Prozessbedingungen in geschlossenen Reaktoren bereit zu stellen.

Die Erfindung zielt nun darauf ab, im Rahmen dieser Vorgaben die Prozessführung wesentlich zu vereinfachen und eine anlagenspezifische und/oder gegebenenfalls saisonspezifisch adaptierte Verfahrensweise als Standardprozess zu schaffen, bei welcher bei gleichzeitig mehr oder weniger standardisiertem Einsatzmaterial, standardisiertem Rohluftzustand und standardisiertem Prozessziel die Steuerungsalgorithmen wesentlich vereinfacht werden.

Zur Lösung dieser Aufgabe besteht das erfindungsgemäße Verfahren im Wesentlichen darin, dass die Prozesstemperatur in der primären Prozessabluft gemessen wird, dass die freigesetzte Netto-Prozesswärme aus der durchgesetzten Luftmenge sowie der Enthalpiedifferenz zwischen Prozessrohluft und Prozessabluft oder aus der durchgesetzten Luftmenge und Messwerten für die $CO_2$-Konzentration der Prozessabluft ermittelt wird und dass aus dem Temperaturmesswert ein Signal für die Steuerung und Regelung der Belüftungsintensität und aus der ermittelten freigesetzten Prozesswärme ein Signal für die Steuerung bzw. Regelung der Nachfeuchtung gewonnen wird. Die erforderliche Nachfeuchtung wird proportional nach dem gemessenen Strom der abgegebenen Netto-Prozesswärme gesteuert, wobei mit Vorteil so vorgegangen wird, dass aus der in einem Zeitintervall freigesetzten Prozesswärme, der durchschnittlichen Änderung der absoluten Feuchte der Prozessluft beim Durchsatz durch das Rottegut (kg $H_2O$/kg trockene Luft) und der Änderung der Prozessluftenthalpie beim Durchsatz durch das Rottegut (MJ/kg trockene Luft) die erforderliche Wassermenge zur Nachfeuchtung der Charge (kg) am Ende des Zeitintervalls ermittelt und geregelt wird.

Das erfindungsgemäße Verfahren wird so durchgeführt, dass der Algorithmus für die Ermittlung der erforderlichen Nachfeuchtungs-Wassermenge mit einem empirischen Korrekturglied für eine Kenngröße der Wasserbilanz des Prozesses korrigiert wird.

Bezogen auf ein bestimmtes Zeitintervall des Rotteprozesses wird die erforderliche Wassermenge zur Nachfeuchtung des Rottegutes erfahrungsgemäß wie folgt dargestellt:

$$Nf \ = \ \Delta H(\Delta x/\Delta h - c)$$

Es bedeuten:

Nf...     erforderliche Wassermenge zur Nachfeuchtung der Charge in kg, bezogen auf ein bestimmtes Zeitintervall, z.B. 24 Stunden,

$\Delta H/$ ...     im entsprechenden Zeitintervall freigesetzte Netto-Prozesswärme in MJ,

Δx... die im Zeitintervall durchschnittlichen Änderung der absoluten Feuchte der Prozessluft beim Durchsatz durch das Rottegut in kg $H_2O$/kg trockene Luft,

Δh... die innerhalb des Zeitintervalls durchschnittliche Änderung der Prozessluftenthalpie beim Durchsatz durch das Rottegut in MJ/kg trockene Luft und

c... Kenngröße der Wasserbilanz des Prozesses in kg $H_2O$/MJ.

Der Wert ΔH*c ist praktisch das Wasserdefizit des Prozesses, das sich aus

- der erforderlichen Änderung der im Rottegut enthaltenen Wassermenge (entsprechend der Anpassung des Wassergehaltes im Substrat mit fortschreitendem Abbau der organischen Trockensubstanz) sowie
- der bei der Mineralisierung organischer Trockensubstanz anfallenden Wassermenge zusammensetzt und ist eine wesentliche Grundlage der Mengenbilanz des Prozesses, und damit auch der Anlagenbemessung.

Dieser Wert könnte theoretisch - wie in der Biotechnologie durchaus üblich - für ein reines Substrat, wie z.B. Glucose, auf Grund bekannter physiologischer Gesetzmäßigkeiten mikrobieller Umsetzungen berechnet werden, bedarf aber bei heterogenem Substrat - wie dies speziell bei der Kompostierung vorliegt - einer empirischen Korrektur:

wenn keine ausreichend abgesicherten Erfahrungswerte für die vorliegende Qualität des Einsatzmaterials verfügbar sind, wird der Wert ΔH * c aus den Betriebsdaten einer - repräsentativen

- Testcharge berechnet und wird zweckmäßigerweise jeweils mit
- dem Prozessabschnitt (Intensivrotte oder Nachrotte),
- dem Typ des Einsatzmaterials,
- der Menge (Anteil) und Qualität der verwendeten Zuschlagkomponenten des Einsatzmaterials sowie
- dem vorgesehenen oder erforderlichen optimalen Massenververhältnis zwischen Substratfeuchte und Gehalt an organischer Trockensubstanz

in die Definition der Bedingungen für den Standardprozess einbezogen.

Analytisch festgestellte Abweichungen, in der Regel geringeren Ausmaßes, können als Korrekturglied des Steueralgorithmus der Nachfeuchtung berücksichtigt werden, wobei vorzugsweise ein vorgegebenes Massenverhältnis zwischen Rottegutfeuchte und Bestand an organischer Trockensubstanz (Erfahrungswert) eingehalten bzw. angestrebt wird. Die Korrektur des Nachfeuchtungsalgorithmus findet vorzugsweise innerhalb von 3 Tagen ab Prozessstart statt.

In der Prozessrohluft und der Prozessabluft werden Zustandsgrößen der Luft messtechnisch erfasst, sodass ständig die Enthalpie und die absolute Feuchte der Prozessluft vor und nach dem Durchsatz durch das Rottegut berechnet werden können. In Verbindung mit der ebenfalls messtechnisch erfassten durchgesetzten Luftmenge wird aus der Enthalpiedifferenz die Netto-Prozesswärme berechnet. Alternativ kann die Netto-Prozesswärme aus den Daten Luftmenge und $CO_2$-Konzentration berechnet werden, da die $CO_2$-Produktion aerober mikrobieller Prozesse der Wärmetönung dieser Prozesse proportional ist, wobei in guter Näherung nur eine - streng genommen durchschnittliche - Proportionalitätskonstante verwendet werden kann.

Insgesamt ergibt sich auf diese Weise ein besonders einfacher Regelalgorithmus bzw. eine besonders einfache Methode zum Errechnen von Steuerungssignalen für die Steuerung aerober Rotteprozesse.

**Patentansprüche**

1. Verfahren zum Steuern oder Regeln von aeroben Rotteprozessen, bei welchem aus Messwerten für Temperatur und/oder Feuchtigkeit und/oder Prozessluftmenge die Belüftungsintensität bzw. die Prozesstemperaturen und/oder die erforderliche Wassermenge zur Nachfeuchtung der Charge gesteuert oder geregelt wird, wobei die Prozesstemperatur in der primären Prozessabluft gemessen und aus dem Temperaturmesswert ein Signal für die Steuerung und Regelung der Belüftungsintensität gewonnen wird, **dadurch gekennzeichnet, dass** die freigesetzte Netto-Prozesswärme ΔH aus der durchgesetzten Luftmenge sowie der Enthalpiedifferenz zwischen Prozessrohluft und Prozessabluft oder aus der durchgesetzten Luftmenge und Messwerten für die $CO_2$-Konzentration der Prozessabluft ermittelt und aus der ermittelten freigesetzten Netto-Prozesswärme ΔH ein Signal für die Steuerung bzw. Regelung der Nachfeuchtung gewonnen wird, wobei die in einem bestimmten Zeitintervall erforderliche Nachfeuchtungs-Wassermenge Nf nach der Formel

$$Nf = \Delta H(\Delta x/\Delta h - c)$$

ermittelt wird, wobei

- ΔH die im entsprechenden zeitintervall freigesetzte Netto-Prozesswärme in MJ,
- Δx die im Zeitintervall durchschnittliche Änderung der absoluten Feuchte der Prozessluft beim Durchsatz durch das Rottegut in kg H2O/kg trokkene Luft,

- Δh die innerhalb des Zeitintervalls durchschnittliche Änderung der Prozessluftenthalpie beim Durchsatz durch das Rottegut in MJ/kg trockene Luft und

- c eine Kenngröβe der Wasserbilanz des Prozesses in kg $H_2O$/MJ ist, die aus den Betriebsdaten einer repräsentativen Testcharge ermittelt wird.

2. Verfahren nach Anspruch 1, **dadurch gekennzeichnet, dass**

der Wert ΔH*c das Wasserdefizit des Prozesses ist, das sich aus

- der erforderlichen Änderung der im Rottegut enthaltenen Wassermenge (entsprechend der Anpassung des Wassergehaltes im Substrat mit fortschreitendem Abbau der organischen Trokkensubstanz) sowie

- der bei der Mineralisierung organischer Trokkensubstanz anfallenden Wassermenge,

zusammensetzt, wobei der Wert ΔH*c aus den Betriebsdaten einer repräsentativen Testcharge berechnet wird.

3. Verfahren nach Anspruch 1 oder 2, **dadurch gekennzeichnet, dass** die Kenngröβe c aus den Betriebsdaten einer repräsentativen Testcharge berechnet und jeweils mit

- dem Prozessabschnitt - Intensivrotte oder Nachrotte - ,

- dem Typ des Einsatzmaterials,

- dem Anteil und der Qualität der verwendeten Zuschlagskomponenten des Einsatzmaterials sowie

- dem vorgesehenen oder erforderlichen optimalen Massenverhältnis zwischen Substratfeuchte und Gehalt an organischer Trockensubstanz

definiert wird.

## Claims

1. Method for controlling or regulating aerobic composting processes, in which the aeration intensity and/or the process temperatures and/or the amount of water required for rewetting the batch is controlled or regulated as a function of measurements of the temperature and/or humidity and/or amount of process air, wherein the process temperature is measured in the primary exhaust air of the process and a signal for controlling and regulating the aeration intensity is obtained from the temperature measurement, **characterized in that** the released net process heat ΔH is determined from the throughput amount of air as well as the enthalpy difference between the process raw air and the process exhaust air, or from the throughput amount of air and measurements for the $CO_2$ concentration of the process exhaust air, and a signal for controlling and/or regulating rewetting is obtained from the determined released net process heat ΔH, wherein the amount of rewetting water Nf required in a defined time interval is determined according to the formula

$$Nf \approx \Delta H(\Delta x/\Delta h - c)$$

wherein:

- ΔH is the net process heat released in the respective time interval in MJ;

- Δx is the time-interval-average change in the absolute humidity of the process air when passing through the compost material in kg $H_2O$/kg dry air;

- Δh is the time-interval-average change in the process air enthalpy when passing through the compost material in MJ/kg dry air; and

- c is a characteristic value of the water balance of the process in kg $H_2O$/MJ, which is determined from the operating data of a representative test batch.

2. A method according to claim 1, **characterized in that** the value ΔH*c is the water deficit of the process, which is composed of

- the required change in the amount of water contained in the compost material (as a function of the adjustment of the water content in the substrate with the progressing degradation of the organic dry substance) and

- the amount of water occurring during the mineralization of organic dry substance,

said value ΔH*c being calculated from the operating data of a representative test batch.

3. A method according to claim 1 or 2, **characterized in that** the characteristic value c is calculated from the operating data of a representative test batch and is each defined by

- the process stage - intense composting or post-composting -,

- the type of charging material,

- the portion and quality of the used additive components of the charging material, and
- the provided or required optimum mass ratio between the substrate moisture and the content of organic dry substance.

## Revendications

1. Procédé de commande ou de régulation de processus de décomposition aérobie, dans lequel, à partir des valeurs de mesure pour la température et/ou l'humidité et/ou la quantité d'air de processus, l'intensité d'aération ou les températures de processus et/ou la quantité d'eau nécessaire pour l'humidification ultérieure de la charge est/sont commandée(s) ou régulée(s), la température de processus étant mesurée dans l'air de processus évacué primaire et un signal pour la commande et la régulation de l'intensité d'aération étant obtenu à partir de la valeur de mesure de la température, **caractérisé en ce que** la chaleur de processus nette libérée ΔH est déterminée à partir de la quantité d'air débitée et de la différence d'enthalpie entre l'air de processus brut et l'air de processus évacué ou à partir de la quantité d'air débitée et des valeurs de mesure pour la concentration en $CO_2$ de l'air de processus évacué et un signal pour la commande et/ou la régulation de l'humidification ultérieure est obtenu à partir de la chaleur de processus nette libérée déterminée ΔH, où la quantité d'eau d'humidification ultérieure Nf nécessaire dans un intervalle de temps défini est déterminée selon la formule

$$Nf = \Delta H \ (\Delta x / \Delta h - c)$$

dans laquelle

- ΔH est la chaleur de processus nette libérée dans l'intervalle de temps correspondant en MJ,
- Δx est la variation moyenne, dans l'intervalle de temps, de l'humidité absolue de l'air de processus lors du débit à travers la matière en décomposition en kg de $H_2O$/kg d'air sec,
- Δh est la variation moyenne, dans l'intervalle de temps, de l'enthalpie de l'air de processus lors du débit à travers la matière en décomposition en MJ/kg d'air sec, et
- c est une grandeur caractéristique du bilan de l'eau du processus en kg de $H_2O$/MJ, qui est déterminée à partir des données de service d'une charge de test représentative.

2. Procédé selon la revendication 1, **caractérisé en ce que** la valeur ΔH*c est le déficit en eau du processus, qui se compose

- de la variation nécessaire de la quantité d'eau contenue dans la matière en décomposition (correspondant à l'adaptation de la teneur en eau dans le substrat à la dégradation progressive de la matière sèche organique) et
- de la quantité d'eau obtenue lors de la minéralisation de la matière sèche organique,

où la valeur ΔH*c est calculée à partir des données de service d'une charge de test représentative.

3. Procédé selon la revendication 1 ou 2, **caractérisé en ce que** la grandeur caractéristique c est calculée à partir des données de service d'une charge de test représentative et est définie respectivement avec

- la portion du processus - décomposition intensive ou décomposition secondaire - ;
- le type de matière mise en oeuvre,
- la proportion et la qualité des composants additionnés utilisés de la matière mise en oeuvre, et
- le rapport en poids optimal prévu ou nécessaire entre l'humidité du substrat et la teneur en matière sèche organique.